# EUROPEAN PATENT APPLICATION

(11) **EP 4 203 485 A1**
(43) Date of publication of application: **28.06.2023**
(21) Application number: 22170547.8
(22) Date of filing: 28.04.2022
(51) Int. Cl.: H04N 21/4363, H04N 21/6547, H04W 4/80, H04N 21/647

(54) **METHOD AND TRANSMISSION OF SCREEN CAST CONTROL, AND STORAGE MEDIUM**

(30) Priority: 21.12.2021 CN 202111573452
(71) Applicant: Beijing Xiaomi Mobile Software Co., Ltd., Beijing 100085 (CN)
(72) Inventor: LI, Haibo, Beijing, 100085 (CN); LI, Geng, Beijing, 100085 (CN)
(74) Representative: Zimmermann, Tankred Klaus

(57) **Abstract**

A method and an apparatus of screen cast control, and a storage medium. The method includes: establishing (S101, S301) a first data link with a first device, wherein the first device includes information to be cast; acquiring (S102, S302) the information to be cast from the first device using the first data link; and transmitting (S103, S311) the information to be cast to a data reception apparatus to trigger the data reception apparatus to cast the information to be cast to a second device.

## Description

### TECHNICAL FIELD

The present invention relates to a field of communication technologies, and particularly to a method and an apparatus of screen cast control, and a storage medium.

### BACKGROUND

Screen cast technology has been widely used with the rapid development of communication technologies. The term "screen cast" refers to casting information of a device to another device for display. For example, video information of a mobile phone can be cast to a TV for playing on the TV.

In related art, casting the information of the device to another device is usually implemented through a cable or an application installed in the device.

In this way, a method of screen cast control has high cost and poor convenience.

### SUMMARY

The present invention seeks to solve at least one of the problems existing in the related art to at least some extent.

A first aspect of the present invention proposes a method of screen cast control, applicable for a data transmission apparatus. The method includes: establishing a first data link with a first device, wherein the first device includes information to be cast; acquiring the information to be cast from the first device using the first data link; and transmitting the information to be cast to a data reception apparatus to trigger the data reception apparatus to cast the information to be cast to a second device.

A second aspect of the present invention proposes a method of screen cast control for a data reception apparatus. The method includes: establishing a second data link with a second device; receiving information to be cast which is transmitted by a data transmission apparatus, wherein the information to be cast is acquired by the data transmission apparatus from the first device; and transmitting the information to be cast to the second device using the second data link to trigger the second device to display the information to be cast.

A third aspect of the present invention proposes an apparatus of screen cast control, applicable for a data transmission apparatus. The apparatus includes: a first establishing module configured to establish a first data link with a first device, wherein the first device includes information to be cast; an acquiring module configured to acquire the information to be cast from the first device using the first data link; and a first transmitting module configured to transmit the information to be cast to a data reception apparatus to trigger the data reception apparatus to cast the information to be cast to a second device.

A fourth aspect of the present invention proposes an apparatus of screen cast control for a data reception apparatus. The apparatus includes: a fourth establishing module configured to establish a second data link with a second device; a second receiving module configured to receive information to be cast which is transmitted by a data transmission apparatus, wherein the information to be cast is acquired by the data transmission apparatus from the first device; and a second transmitting module configured to transmit the information to be cast to the second device using the second data link to trigger the second device to display the information to be cast.

A fifth aspect of the present invention proposes a non-transitory computer readable storage medium stored with computer instructions. The computer instructions are configured to perform the method as described in the above first aspect of the invention or perform the method as described in the above second aspect of the invention by a computer.

Additional aspects and advantages of the present invention will be partially given in the following description, and some will become obvious from the following description, or be understood through practice of the present invention.

### BRIEF DESCRIPTION OF THE DRAWINGS

The above and/or additional aspects and advantages of the present invention will become obvious and easy to understand from the following description of embodiments in combination with the accompanying drawings, in which:
FIG. 1 is a flowchart illustrating a method of screen cast control according to an embodiment of the present invention.
FIG. 2 is a schematic diagram illustrating a usage scene of a method of screen cast control according to an embodiment of the present invention.
FIG. 3 is a flowchart illustrating a method of screen cast control according to another embodiment of the present invention.
FIG. 4 is a flowchart illustrating a method of screen cast control according to an embodiment of the present invention.
FIG. 5 is a schematic diagram illustrating a process of screen cast according to an embodiment of the present invention.
FIG. 6 is a flowchart illustrating a method of screen cast control according to another embodiment of the present invention.
FIG. 7 is a flowchart illustrating a method of screen cast control according to another embodiment of the present invention.
FIG. 8 is a flowchart illustrating establishment of a first communication link according to an embodiment of the present invention.
FIG. 9 is a block diagram illustrating an apparatus of screen cast control according to an embodiment of the present invention.
FIG. 10 is a block diagram illustrating an apparatus of screen cast control according to another embodiment of the present invention.
FIG. 11 is a block diagram illustrating an apparatus of screen cast control according to an embodiment of the present invention.
FIG. 12 is a block diagram illustrating an apparatus of screen cast control according to another embodiment of the present invention.
FIG. 13 is a block diagram illustrating a structure of a system of screen cast control according to an embodiment of the present invention.
FIG. 14 is a block diagram illustrating a representative electronic device for implementing embodiments of the present invention.

### DETAILED DESCRIPTION

Certain embodiments of the present invention are described in detail below. Examples of embodiments are shown in the accompanying drawings, in which the constant same or similar labels indicate the same or similar components or components with the same or similar functions. The embodiments described below with reference to the accompanying drawings are exemplary, and are intended to explain the invention, but should not be understood as a limitation to the invention. On the contrary, embodiments of the present invention include all changes, modifications and equivalents that fall within the scope of the appended claims.

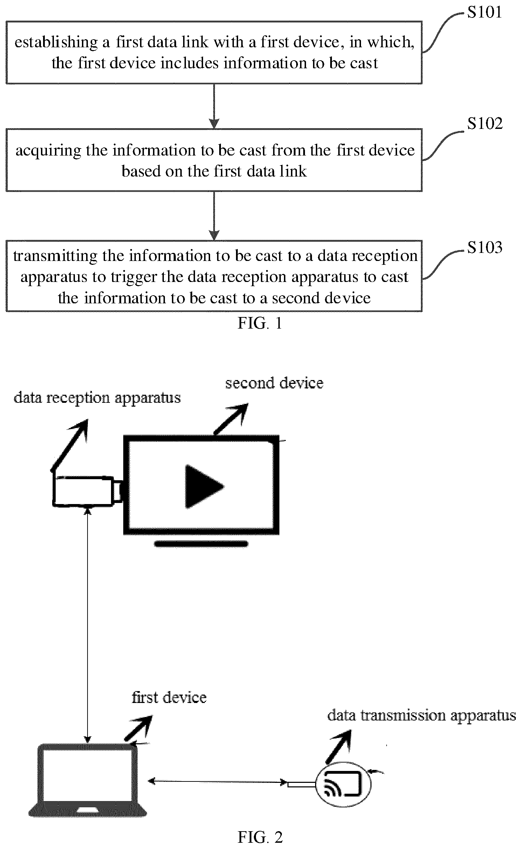

FIG. 1 is a flowchart illustrating a method of screen cast control according to an embodiment of the present invention.

It is noted that the method of screen cast control of this embodiment may be executed by an apparatus of screen cast control. The apparatus may be implemented by software and/or hardware, and may be configured in a data transmission apparatus which may include but is not limited to a terminal, a server, etc.

As illustrated in FIG. 1, the method of screen cast control is applicable for a data transmission apparatus and includes the following blocks.

At block S101, a first data link with a first device is established. The first device includes information to be cast.

The method of screen cast control may be applied to a data transmission apparatus. The data transmission apparatus may be a hardware apparatus capable of performing a data transmission function during executing the method of screen cast control, for example, a computer device capable of performing the data transmission function, or a terminal capable of performing the data transmission function, without being limited thereto.

Information that is to be cast presently may be referred to as the information to be cast, and the information may be, e.g., video information, image information, text information, etc., without being limited thereto.

The device where the information to be cast is located may be referred to as the first device. The first device may be a terminal device including the information to be cast, such as a mobile phone, a computer, a tablet computer, etc., without being limited thereto.

An explanation and a description of an embodiment of the present invention is given below in combination with FIG. 2. FIG. 2 is a schematic diagram illustrating an usage scene of a method of screen cast control according to an embodiment of the present invention. The usage scene includes the data transmission apparatus, the first device, the data reception apparatus and the second device. A device that supports displaying the information to be cast based on the screen cast may be referred to as the second device. The second device may be a hardware apparatus that supports a cast display function, specifically a television, a computer display screen, etc. The data reception device may be a hardware apparatus capable of performing a data reception function during executing the method of screen cast control, specifically, for example, a computer device capable of performing the data reception function, or, for example, a terminal capable of performing the data reception function, without being limited thereto.

A usage scene of an embodiment of the present invention may be, for example, as follows: receiving, by the data transmission apparatus, the information to be cast, which is send by the first device, and then sending, by the data transmission apparatus, the foregoing information to be cast to the data reception apparatus, and controlling, by the data reception apparatus, the second device to display the information to be cast.

The following description of an embodiment of the present invention may take the above usage scene as an example. In addition, embodiments of the present invention may also be applied to any other possible usage scene of screen cast control, without being limited thereto.

A channel for data transmission between the data transmission apparatus and the first device may be referred to as the first data link.

In an embodiment of the present invention, establishing the first data link between the data transmission apparatus and the first device may include providing a corresponding Display Port (DP) by the first device, and then establishing, by the data transmission apparatus, the corresponding first data link with the first device via the DP.

In another embodiment, when establishing the first data link with the first device, a GAP may be pre-configured between the data transmission apparatus and the first device. The GAP may transmit data between the data transmission apparatus and the first device. In other words, the corresponding GAP may be configured for the data transmission apparatus and the first device, and the first data link between the data transmission apparatus and the first device may be established via the GAP. Alternatively, the first data link between the data transmission apparatus and the first device may be established in any other possible way, without being limited thereto. The GAP is configured to realize security isolation between different networks.

At block S102, the information to be cast is acquired from the first device using the first data link or via the first data link.

In an embodiment of the present invention, after establishing the first data link between the data transmission apparatus and the first device, the first device may transmit the information to be cast to the data transmission apparatus through the first data link, so as to acquire the information to be cast from the first device using the first data link.

In some embodiments, acquiring the information to be cast from the first device using the first data link may include: the data transmission apparatus generates demand information corresponding to the information to be cast according to service requirements of an actual cast control scene (the demand information may be configured to describe a demand of the information to be cast for the data transmission apparatus), and transmits the demand information to the first device via the first data link; after receiving the demand information, the first device may determine the information to be cast corresponding to the demand information and transmit the information to be cast to the data transmission apparatus via the first data link, without being limited thereto.

Alternatively, in some embodiments, acquiring the information to be cast from the first device using the first data link may include: sending an information acquisition request to the first device in response to a first cast instruction; receiving the information to be cast fed back by the first device using the first data link, cast information corresponding to the information acquisition request being as the information to be cast. Since the cast information corresponding to the information acquisition request is determined as the information to be cast, the information to be cast may be matched with the information acquisition request, and the information to be cast may effectively meet the information acquisition request, and cast control requirements of users.

Information configured to acquire the information to be cast from the first device, which is generated by the data transmission device, may be referred to as the information acquisition request.

An instruction configured to trigger the data transmission apparatus to generate the information acquisition request may be referred to as the first cast instruction. For example, the data transmission apparatus may be configured with an instruction interface, receive the first cast instruction using the instruction interface or via the instruction interface, obtain relevant identification information of the information to be cast from the first cast instruction, and then generate the information acquisition request according to the relevant identification information, without being limited thereto.

In an embodiment of the present invention, the data transmission apparatus may transmit the information acquisition request to the first device in response to the first cast instruction. After receiving the information acquisition request sent by the data transmission apparatus, the first device may analyze the information acquisition request to determine the cast information corresponding to the information acquisition request from cast information in the first device, and determine the cast information corresponding to the information acquisition request as the information to be cast, then, the first device may feedback the information to be cast to the data transmission apparatus using the first data link, and the data transmission apparatus may execute the subsequent method of screen cast control based on the information to be cast.

At block S103, the information to be cast is transmitted to a data reception apparatus to trigger the data reception apparatus to cast the information to be cast to a second device.

Alternatively, in some embodiments, the method further may include establishing a first communication link. The first communication link may be a communication link for transmitting the information to be cast.

In some embodiments, transmitting the information to be cast to the data reception apparatus may include transmitting the information to be cast to the data reception apparatus using the first communication link or via the first communication link. The first communication link is established and the information to be cast is transmitted to the data reception apparatus using the first communication link. Therefore, transmission cost required for cast information remote transmission between the first device and the second device may be effectively saved, and cost of information transmission may be effectively reduced. In addition, since the data reception apparatus and the data transmission apparatus require a function of carrying data transmission rather than caring about a screen cast function, the complex logic of the screen cast control may be decoupled, and then complexity of the logic of the screen cast control may be effectively reduced, such that the data reception apparatus may efficiently obtain the information to be cast.

In some embodiments of the present invention, the data transmission apparatus, after acquiring the information to be cast from the first device using the first data link, may transmit the information to be cast to the data reception apparatus to trigger the data reception apparatus to cast the information to be cast to the second device.

In some embodiments, transmitting the information to be cast to the data reception apparatus may include that: the data transmission apparatus and the data reception apparatus each may be pre-provided with a near field communication (NFC) module, and then the data transmission apparatus may transmit the information to be cast to the data reception apparatus using or via a NFC connection established by the NFC modules of the data transmission apparatus and the data reception apparatus.

In other embodiments, the data transmission apparatus and the data reception apparatus may also interact with each other through, for example, Internet, industrial LAN, Bluetooth, etc., so as to transmit the information to be cast to the data reception apparatus. For example, the data transmission apparatus and the data reception apparatus may perform data communication with each other through an interface of the industrial LAN, that is, the data transmission apparatus may transmit the information to be cast to the data reception apparatus through the interface of the industrial LAN to trigger the data reception apparatus to cast the information to be cast to the second device.

Alternatively, transmitting the information to be cast to the data reception apparatus may be realized by any other possible way, without being limited thereto.

Alternatively, in some embodiments, transmitting the information to be cast to the data reception apparatus to trigger the data reception apparatus to cast the information to be cast to the second device may include: in response to a second cast instruction, generating a cast request according to the information to be cast; transmitting the cast request to the data reception apparatus using the first communication link so as to trigger the data reception apparatus to obtain the information to be cast from the cast request and to cast the information to be cast to the second device. Since the screen cast request is generated in combination with the information to be cast, the screen cast request may effectively characterize the information to be cast, when the screen cast request is transmitted to the data reception apparatus based on the screen cast request, the data reception apparatus may accurately trigger the data reception apparatus to obtain the screen cast information from the screen cast request, and the second device may accurately display the information to be cast, so as to effectively meet screen cast requirements of users.

A request triggering the data reception apparatus to perform screen cast processing on the information to be cast may be referred to as the screen cast request.

An instruction for triggering the data transmission apparatus to generate the screen cast request, which is generated by the data transmission apparatus, may be referred to as the second cast instruction.

In certain embodiments of the present invention, the data transmission apparatus may, in response to the second cast instruction, generate the screen cast request according to the information to be cast obtained from the first device, and transmit the screen cast request to the data reception apparatus using the first communication link, and then the data reception apparatus may analyze the screen cast request to determine the information to be cast from the screen cast request, and cast the information to be cast to the second device to enable the second device to display the information to be cast.

In this embodiment, the first data link is established with the first device which includes the information to be cast, the information to be cast is acquired from the first device via the first data link, and the information to be cast is transmitted to the data reception apparatus to trigger the data reception apparatus to cast the information to be cast to the second device. Therefore, when the information to be cast in the first device is cast to the second device, modification costs of the first device and of the second device may be effectively avoided, constraints regarding a distance in spatial positions between the first device and the second device may be avoided, the cost of the screen cast may be effectively saved, the convenience of an operation of the screen cast control may be effectively improved, and an effect of the screen cast control may be effectively improved.

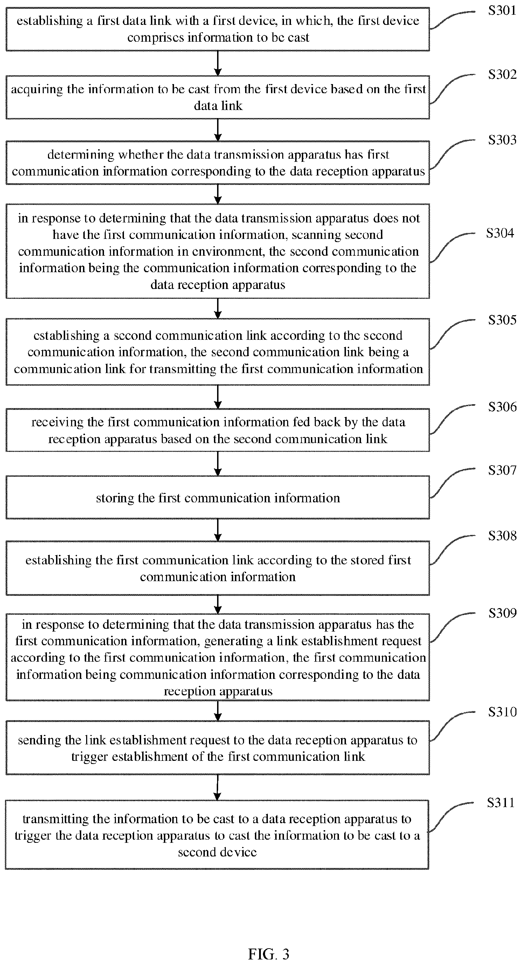

FIG. 3 is a flowchart illustrating a method of screen cast control according to another embodiment of the present invention.

As illustrated in FIG. 3, the method of screen cast control is applicable for a data transmission apparatus and includes the following blocks.

At block S301, a first data link with a first device is established. The first device includes information to be cast.

At block S302, the information to be cast is acquired from the first device using the first data link.

The description of the blocks S301-302 corresponds to the above embodiments, which is not repeated herein.

At block S303, it is determined whether the data transmission apparatus has first communication information corresponding to a data reception apparatus.

Communication information transmitted by the data reception apparatus that has established a communication connection with the data transmission apparatus (a mode of the communication connection may be specifically, for example, a Wi-Fi communication connection mode, without being limited thereto) may be referred to as the first communication information. The first communication information may be specifically, for example, wireless fidelity (Wi-Fi) communication information, which may be, for example, Wi-Fi service set identifier (SSID) information and Wi-Fi connection password information of the data reception apparatus, without being limited thereto.

In an embodiment of the present invention, determining whether the data transmission apparatus has the first communication information corresponding to the data reception apparatus may include that, after power on and start, the data transmission apparatus may pre-determine whether there is the data reception apparatus with which the communication connection has been established, and when it is determined that there is the data reception apparatus with which the communication connection has been established, determine the Wi-Fi communication information corresponding to the data reception apparatus, and determine the Wi-Fi communication information as the first communication information.

At block S304, in response to determining that the data transmission apparatus does not have the first communication information, second communication information is scanned from surroundings. The second communication information is the communication information corresponding to the data reception apparatus.

Communication information transmitted by the data reception apparatus that fails to establish the communication connection with the data transmission apparatus (the mode of the communication connection may be specifically, for example, Bluetooth communication connection mode, without being limited thereto), may be referred to as the second communication information. The second communication information may be specifically, for example, Bluetooth communication information corresponding to the data reception apparatus, which may be specifically, for example, communication establishment request information and device information, parameter information, etc., without being limited thereto.

In certain embodiments of the present invention, when the data transmission apparatus is powered on and determines that there is no data reception apparatus with which the communication connection has been established, the data transmission apparatus may scan whether there is the second communication information sent by the data reception apparatus with which the communication connection is to be established, and then execute the subsequent method of screen cast control based on the second communication information. The details are described with reference to the subsequent embodiments.

For example, when the data transmission apparatus is powered on and determines that there is no data reception apparatus with which the Wi-Fi communication connection is established, the data transmission apparatus may trigger scanning whether there is the Bluetooth communication information sent by the data reception apparatus with which the communication connection is to be established, and when the Bluetooth communication information is scanned, establish a second communication link between the data transmission apparatus and the data reception apparatus according to the Bluetooth communication information. The details are described with reference to the subsequent embodiments.

At block S305, a second communication link is established according to the second communication information. The second communication link is a communication link for transmitting the first communication information.

A communication link that corresponds to a second communication type and is established between the data transmission apparatus and the data reception apparatus may be referred to as the second communication link, which is the communication link for transmitting the first communication information.

The second communication type may be specifically, for example, the Bluetooth communication, without being limited thereto.

In certain embodiments of the present invention, after scanning the second communication information sent by the data reception apparatus, the data transmission apparatus may establish the second communication link for transmitting the first communication information according to the second communication information. Since the second communication link is established in combination with the second communication information, the data reception apparatus with which the communication link is to be established may be accurately determined based on the second communication information, and establishment logic for different communication links may not interfere with each other, thus accurately establishing the second communication link and ensuring successful implementation of the establishment logic of the second communication link.

For example, after scanning information of establishment request of Bluetooth communication connection sent by the data reception apparatus, the data transmission apparatus may interact with the data reception apparatus to agree to the establishment request of Bluetooth communication connection sent by the data reception apparatus, so as to establish the second communication link between the data transmission apparatus and the data reception apparatus, which corresponds to the Bluetooth communication and transmit the first communication information using the second communication link or via the second communication link. The details are described with reference to the subsequent embodiments.

At block S306, the first communication information fed back by the data reception apparatus is received using the second communication link.

In certain embodiments of the present invention, after establishing the second communication link between the data transmission apparatus and the data reception apparatus, which corresponds to the Bluetooth communication, the data transmission apparatus may receive the first communication information fed back by the data reception apparatus using the second communication link. In combination with receiving the first communication information fed back by the data reception apparatus using the second communication link, the data transmission apparatus receiving the first communication information fed back directly by other devices may be avoided, thus, during the implementation of the method of screen cast control, effectively avoiding interferences caused by access of other irrelevant devices to a process of the screen cast control, and effectively ensuring the successful implementation of the method of screen cast control.

At block S307, the first communication information is stored.

In certain embodiments of the present invention, after receiving the first communication information fed back by the data reception apparatus using the second communication link, the data transmission apparatus may store the first communication information, and then execute the subsequent method of screen cast control based on the first communication information locally stored by the data transmission apparatus. The details are described with reference to the subsequent embodiments.

At block S308, the first communication link is established according to the stored first communication information.

For example, establishing the first communication link according to the stored first communication information may include establishing the first communication link between the data transmission apparatus and the data reception apparatus based on the Wi-Fi SSID information and Wi-Fi connection password information of the data reception apparatus stored by the data transmission apparatus, without being limited thereto.

In certain embodiments of the present invention, the first communication link is established according to the stored first communication information, thus, a reading time of reading the first communication information from external may be effectively saved, establishment efficiency of the first communication link may be effectively improved based on the stored first communication information.

At block S309, in response to determining that the data transmission apparatus has the first communication information, a link establishment request is generated according to the first communication information. The first communication information is communication information corresponding to the data reception apparatus

A request that is for the first communication link and is generated by the data transmission apparatus may be referred to as the link establishment request.

In certain embodiments of the present invention, after power on and start, the data transmission apparatus may determine whether the data transmission apparatus locally exists and the first communication information that has been stored, read the first communication information stored locally when determining that the first communication information exists, and generate the corresponding link establishment request according to the first communication information, and then establish the first communication link based on the link establishment request. For details, please refer to the subsequent embodiments. The details are described with reference to the subsequent embodiments.

At block S310, the link establishment request is sent to the data reception apparatus to trigger establishment of the first communication link.

In certain embodiments of the present invention, after generating the link establishment request according to the first communication information, the data transmission apparatus may send the link establishment request to the data reception apparatus. After receiving the link request, the data reception apparatus may establish the first communication link under a case of agreeing the link establishment request.

In certain embodiments of the present invention, when it is determined that there is the first communication information corresponding to the data reception apparatus, the link establishment request adapted to the first communication information is generated according to the first communication information. Therefore, when the link establishment request is sent to the data reception apparatus, the establishment of the first communication link adapted to the link establishment request may be accurately triggered, and the establishment effect of the first communication link may be effectively improved.

At block S311, the information to be cast is transmitted to the data reception apparatus to trigger the data reception apparatus to cast the information to be cast to the second device.

The description of the block S311 corresponds to the above embodiments, which is not repeated herein.

In some embodiments, the first data link with the first device is established, the information to be cast is acquired from the first device using the first data link, and it is determined whether the data transmission apparatus has the first communication information corresponding to the data reception apparatus, in response to determining that the data transmission apparatus does not have the first communication information, the environment is scanned for the second communication information, and then the second communication link is established in combination with the second communication information. Therefore, the data reception apparatus with which the communication link is to be established may be accurately determined based on the second communication information, the establishment logic for different communication links may not interfere with each other, thus accurately establishing the second communication link and ensuring successful implementation of the establishment logic of the second communication link. In addition, the first communication information fed back by the data reception apparatus is received using the second communication link, thus, avoiding the data transmission apparatus receiving the first communication information fed back directly by other devices, and during the implementation of the method of screen cast control, effectively avoiding the interferences caused by access of other irrelevant devices to a process of the screen cast control, and the effectively ensuring the successful implementation of the method of screen cast control. Also, the first communication link is established according to the stored first communication information, thus, the reading time of reading the first communication information from external may be effectively saved, establishment efficiency of the first communication link may be effectively improved based on the stored first communication information. Also, in response to determining that the data transmission apparatus has the first communication information, the data transmission apparatus generates the link establishment request according to the first communication information, sends the link establishment request to the data reception apparatus to trigger the establishment of the first communication link, and transmit the information to be cast to the data reception apparatus to trigger the data reception apparatus to cast the information to be cast to the second device, which may effectively improve convenience of an operation of the screen cast control and effect of the screen cast control.

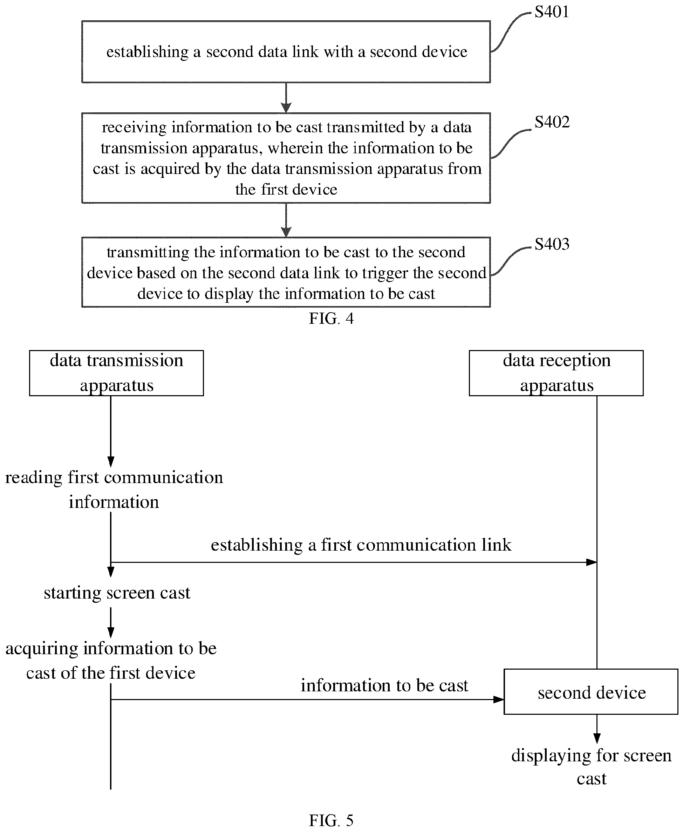

FIG. 4 is a flowchart illustrating a method of screen cast control according to an embodiment of the present invention.

It is noted that the method of screen cast control of this embodiment may be executed by an apparatus of screen cast control. The apparatus may be implemented by software and/or hardware, and configured in a data reception apparatus which may include but is not limited to a terminal, a server, etc.

As illustrated in FIG. 4, the method of screen cast control is applicable for a data reception apparatus and includes the following blocks.

The meaning and description of the terms in this embodiment corresponding to those in the above-described embodiments is not repeated here.

At block S401, a second data link with a second device is established.

The method of screen cast control may be applied to a data reception apparatus. That is, the method may include as follows: the data reception apparatus receives information to be cast - the information to be cast being send by a data transmission apparatus, and then the data reception apparatus transmits the information to be cast to the second device, and the second device displays the information to be cast.

A channel for data transmission between the data reception apparatus and the second device may be referred to as the second data link.

In certain embodiments of the present invention, establishing the second data link between the data reception apparatus and the second device may include providing a corresponding data transmission interface (such as, a high definition multimedia interface (HDMI), a DP interface, etc., without being limited thereto) by the data reception apparatus, and then establishing, by the second device, the second data link with the data reception apparatus via the data transmission interface.

In another embodiment, when establishing the second data link with the second device, a GAP may be pre-configured between the data reception apparatus and the second device. The GAP may transmit data between the data reception apparatus and the second device. In other words, the corresponding GAP may be configured for the data reception apparatus and the second device, and the second data link between the data reception apparatus and the second device may be established via the GAP. Alternatively, the second data link between the data reception apparatus and the second device may be established in any other possible way, without being limited thereto.

At block S402, information to be cast, which is transmitted by a data transmission apparatus, is received. The information to be cast is acquired by the data transmission apparatus from the first device.

In some embodiments, receiving the information to be cast, which is transmitted by the data transmission apparatus, may include that: the data transmission apparatus and the data reception apparatus each may be pre-provided with a near field communication (NFC) module, and then the data reception apparatus may receive the information to be cast, which is transmitted by the data transmission apparatus, using or via a NFC connection established by the NFC modules of the data transmission apparatus and the data reception apparatus.

In other embodiments, the data transmission apparatus and the data reception apparatus may also interact with each other through, for example, Internet, industrial LAN, Bluetooth, etc., so as to receive the information to be cast which is transmitted by the data transmission apparatus. For example, the data transmission apparatus and the data reception apparatus may perform data communication with each other through an interface of the industrial LAN, that is, the data reception apparatus may receive the information to be cast, which is transmitted by the data transmission apparatus, through the interface of the industrial LAN.

Alternatively, receiving the information to be cast, which is transmitted by the data transmission apparatus, may be realized by any other possible way, without being limited thereto.

At block S403, the information to be cast is transmitted to the second device using the second data link or via the second data link to trigger the second device to display the information to be cast.

In an embodiment of the present invention, after establishing the second data link between the data reception apparatus and the second device, the data reception apparatus may transmit the information to be cast to the second device using the second data link to trigger the second device to display the information to be cast.

FIG. 5 is a schematic diagram illustrating a process of screen cast according to an embodiment of the present invention. The data transmission apparatus may read first communication information stored locally after power on and start, and then establish a first communication link with the data reception apparatus based on the first communication information. After the first communication link is established, the screen cast may be initiated. At this time, the data transmission apparatus may receive the information to be cast of the first device and transmit the information to be cast to the second device through the first communication link. After receiving the information to be cast, the second device may initiate a cast interface to display the information to be cast.

In this embodiment, the second data link with the second device is established, the information to be cast, which is transmitted by the data transmission apparatus, is received, in which the information to be cast is acquired by the data transmission apparatus from the first device, and the information to be cast is transmitted to the second device using the second data link to trigger the second device to display the information to be cast. Therefore, when the second device obtain the information to be cast from the first device, the present invention may effectively avoid modification costs of the first device and of the second device, avoid constraints regarding a distance in spatial positions between the first device and the second device, effectively save the cost of the screen cast, effectively improve the convenience of an operation of the screen cast control, and effectively improve an effect of the screen cast control.

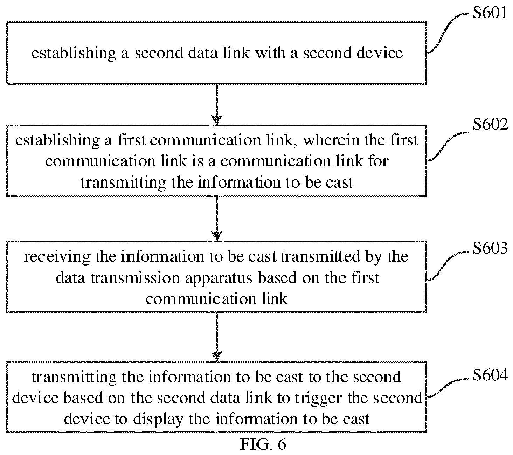

FIG. 6 is a flowchart illustrating a method of screen cast control according to another embodiment of the present invention.

As illustrated in FIG. 6, the method of screen cast control is applicable for a data reception apparatus and includes the following blocks.

At block S601, a second data link with a second device is established.

At block S602, a first communication link is established. The first communication link is a communication link for transmitting the information to be cast.

The description of the blocks S601-602 corresponds to the above embodiments, which is not repeated herein.

At block S603, the information to be cast, which is transmitted by the data transmission apparatus, is received using the first communication link.

In some embodiments, after establishing the first communication link for transmitting the information to be cast, the data reception apparatus may receive the information to be cast, which is transmitted by the data transmission apparatus, through the first communication link. The direct first communication link is established between the data reception apparatus and the data transmission apparatus, and the information to be cast is transmitted to the data reception apparatus using the first communication link. Therefore, transmission cost required for cast information remote transmission between the first device and the second device may be effectively saved, and cost of information transmission may be effectively reduced. In addition, the data reception apparatus and the data transmission apparatus carry a function of data transmission rather than caring about a screen cast function, the complex logic of the screen cast control may be decoupled, and then complexity of the logic of the screen cast control may be effectively reduced, such that the data reception apparatus may efficiently obtain the information to be cast, which is transmitted by the data transmission apparatus, through the first communication link.

In some embodiments, acquiring the information to be cast from the first device using the first data link may include that: the data transmission apparatus generates demand information corresponding to the information to be cast according to service requirements of an actual cast control scene (the demand information may be configured to describe a demand of the information to be cast for the data transmission apparatus), and transmits the demand information to the first device via the first data link; after receiving the demand information, the first device may determine the information to be cast corresponding to the demand information and transmit the information to be cast to the data transmission apparatus via the first data link, without being limited thereto.

Alternatively, in some embodiments, receiving the information to be cast, which is transmitted by the data transmission apparatus, using the first communication link may include: receiving a cast request transmitted by the data transmission apparatus, the cast request being generated according to the information to be cast by the data transmission apparatus; obtaining the information to be cast from the cast request. Therefore, the data reception apparatus may efficiently receive the cast request transmitted by the data transmission apparatus through the first communication link. The cast request is generated according to the information to be cast, thus, when analyzing the cast request based on the projection cast, the information to be cast corresponding to the cast request may be accurately analyzed and obtained, and accuracy of the information to be cast may be effectively improved.

In other words, in an embodiment of the present invention, receiving the information to be cast, which is transmitted by the data transmission apparatus, using the first communication link may include: receiving the cast request transmitted by the data transmission apparatus using the first communication link, and analyzing the cast request to obtain the information to be cast from the cast request.

At block S604, the information to be cast is transmitted to the second device using the second data link to trigger the second device to display the information to be cast.

The description of the block S604 corresponds to the above embodiments, which is not repeated herein.

In this embodiment, by establishing the second data link with the second device, establishing the first communication link for transmitting the information to be cast, and then receiving the information to be cast, which is transmitted by the data transmission apparatus, using the first communication link, transmission cost of the information to be cast may be effectively reduced. In addition, the data reception apparatus and the data transmission apparatus carry a function of data transmission rather than caring about a screen cast function, the complex logic of the screen cast control may be decoupled, and then complexity of the logic of the screen cast control may be effectively reduced, such that the data reception apparatus may efficiently receive the information to be cast, which is transmitted by the data transmission apparatus, through the first communication link. The information to be cast is transmitted to the second device using the second data link to trigger the second device to display the information to be cast, which may effectively improve convenience of the operation of screen cast control and effect of the screen cast control.

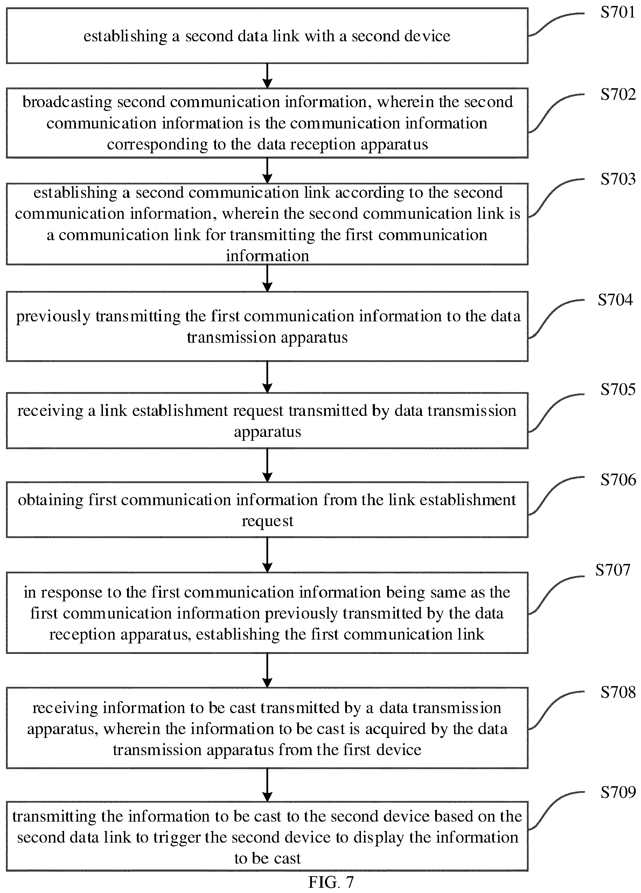

FIG. 7 is a flowchart illustrating a method of screen cast control according to another embodiment of the present invention.

As illustrated in FIG. 7, the method of screen cast control is applicable for a data reception apparatus and includes the following blocks.

At block S701, a second data link with a second device is established.

The description of the block S701 corresponds to the above embodiments, which is not repeated herein.

At block S702, second communication information is broadcasted. The second communication information is the communication information corresponding to the data reception apparatus.

In an embodiment of the present invention, after the data reception apparatus is powered on and started, the data reception apparatus may broadcast the second communication information, such that the data transmission apparatus may establish the second communication link according to the second communication information after receiving the broadcast second communication information. The details are described with reference to the subsequent embodiments.

At block S703, a second communication link is established according to the second communication information. The second communication link is a communication link for transmitting the first communication information.

In an embodiment of the present invention, after receiving the second communication information broadcast by the data reception apparatus, the data transmission apparatus may establish the second communication link between the data transmission apparatus and the data reception apparatus, which corresponds to Bluetooth communication, according to the second communication information. The data reception apparatus transmits the second communication information through broadcasting, and broadcasting transmission has advantages of wide transmission range and high transmission convenience, thus, when receiving the second communication information broadcast by the data reception apparatus, the data transmission apparatus may effectively save a capture time of the second communication information, and then establishment efficiency of the second communication link may be effectively improved.

For example, after the data reception apparatus broadcasts Bluetooth communication information, the data transmission apparatus may receive the Bluetooth communication information and send a Bluetooth matching request to the data reception apparatus according to the Bluetooth communication information. In response to the data reception apparatus agreeing the Bluetooth matching request, the data reception apparatus may establish the second communication link between the data transmission apparatus and the data reception apparatus, which corresponds to the Bluetooth communication, and transmit the first communication information using the second communication link. The details are described with reference to the subsequent embodiments.

At block S704, the first communication information is previously transmitted to the data transmission apparatus.

Alternatively, in some embodiments, previously transmitting the first communication information to the data transmission apparatus may include previously transmitting the first communication information to the data transmission apparatus using the second communication link. Because of previously transmitting the first communication information to the data transmission apparatus using the second communication link, previously transmitting the first communication information to the data transmission apparatus may be realized using the second communication link, further, a comprehensive and available first communication information foundation may be provided for the establishment of the first communication link, waiting for the first communication information during the establishment of the first communication link may be avoided, and the establishment efficiency of the first communication link may be effectively improved.

In certain embodiments of the present invention, after establishing the second communication link for transmitting the first communication information, the data reception apparatus may transmit its corresponding first communication information to the data transmission apparatus using the second communication link, such that the data transmission apparatus may establish the first communication link between the data reception apparatus and the data transmission apparatus based on the first communication information. The details are described with reference to the subsequent embodiments.

At block S705, a cast request transmitted by the data transmission apparatus is received.

A request that is transmitted by the data transmission apparatus and for triggering the establishment of the first communication link for transmitting the information to be cast may be referred to as a link establishment request.

In an embodiment of the present invention, after the data reception apparatus transmits the first communication information to the data transmission apparatus through the second communication link, the data transmission apparatus may generate the corresponding link establishment request based on the first communication information and transmit the link establishment request to the data reception apparatus.

At block S706, the information to be cast from the cast request is obtained.

In an embodiment of the present invention, after receiving the link establishment request transmitted by the data transmission apparatus, the data reception apparatus may analyze the data link establishment request (an analysis processing manner may be specifically, for example, text analysis, semantic analysis, etc., without being limited thereto), so as to obtain the first communication information from the data link establishment request.

At block S706, in response to the first communication information being same as the first communication information previously transmitted by the data reception apparatus, the first communication link is established.

In an embodiment of the present invention, by receiving the link establishment request transmitted by the data transmission apparatus, the first communication information adapted to the link establishment request may be accurately analyzed based on the link request, and when the first communication information is the same as the first communication information previously transmitted by the data reception apparatus, the first communication link may be accurately established based on the first communication information, and the establishment effect of the first communication link is effectively improved.

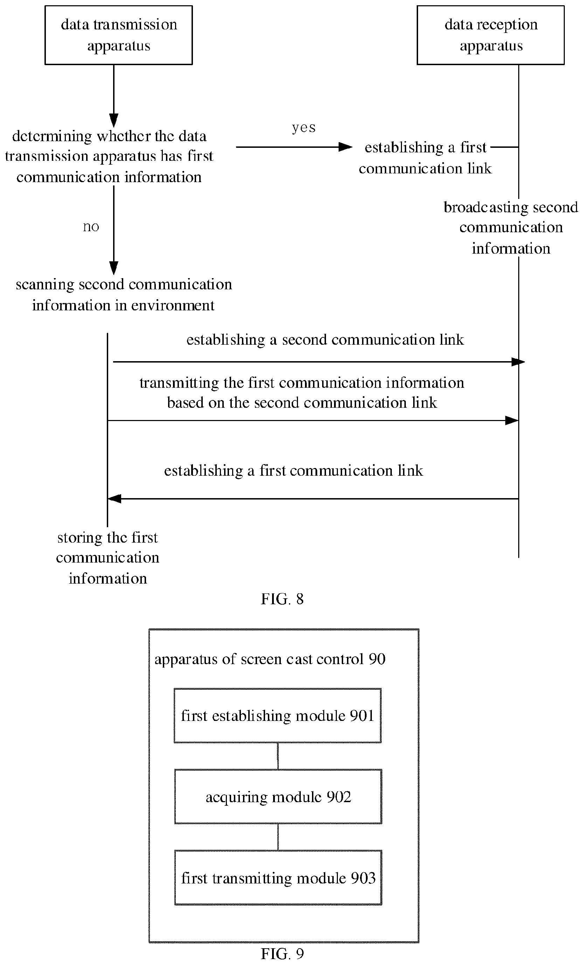

FIG. 8 is a flowchart illustrating establishment of a first communication link according to an embodiment of the present invention. After power on and start, the data transmission apparatus may pre-determine whether there is the first communication information corresponding to the data reception apparatus. In response to determining that there is the first communication information, the data transmission apparatus may establish the first communication link based on the first communication information. In response to determining that there is no first communication information, the data transmission apparatus may scan whether there is the second communication information broadcast by the data reception apparatus, and establish the second communication link when obtaining the second communication information broadcast by the data reception apparatus, and transmit the first communication information to the data reception apparatus using the second communication link to establish the first communication link, and store the first communication information to the data transmission apparatus locally.

At block S708, information to be cast, which is transmitted by a data transmission apparatus, is received. The information to be cast is acquired by the data transmission apparatus from the first device.

At block S709, the information to be cast is transmitted to the second device using the second data link to trigger the second device to display the information to be cast.

The description of the blocks S708-709 corresponds to the above embodiments, which is not repeated herein.

In this embodiment, by establishing the second data link with the second device, broadcasting the second communication information, and establishing the second communication link according to the second communication information, the data reception apparatus transmits the second communication information through broadcasting, and broadcasting transmission has the advantages of a wide transmission range and a high transmission convenience, thus, when receiving the second communication information broadcast by the data reception apparatus, the data transmission apparatus may effectively save the capture time of the second communication information, and then the establishment efficiency of the second communication link may be effectively improved. In addition, the data reception apparatus may previously transmit the first communication information to the data transmission apparatus, receive the link establishment request transmitted by the data transmission apparatus, analyze and obtain the first communication information from the link establishment request, thus realizing the accurate establishment of the first communication link based on the first communication information when the first communication information is the same as the first communication information previously transmitted by the data reception apparatus, which may effectively improve the establishment effect of the first communication link. Also, by receiving the information to be cast which is transmitted by the data transmission apparatus, and transmitting the information to be cast to the second device using the second data link, to trigger the second device to display the information to be cast, cost of the screen cast may be effectively saved, convenience of an operation of the screen cast control may be effectively improved, and effect of the screen cast control may be effectively improved.

FIG. 9 is a block diagram illustrating an apparatus of screen cast control according to an embodiment of the present invention.

As illustrated in FIG. 9, the apparatus 90 of screen cast control is applicable for a data transmission apparatus and includes a first establishing module 901, an acquiring module 902 and a first transmitting module 903.

The first establishing module 901 is configured to establish a first data link with a first device, in which, the first device includes information to be cast;

The acquiring module 902 is configured to acquire the information to be cast from the first device using the first data link; and

The first transmitting module 903 is configured to transmit the information to be cast to a data reception apparatus to trigger the data reception apparatus to cast the information to be cast to a second device.

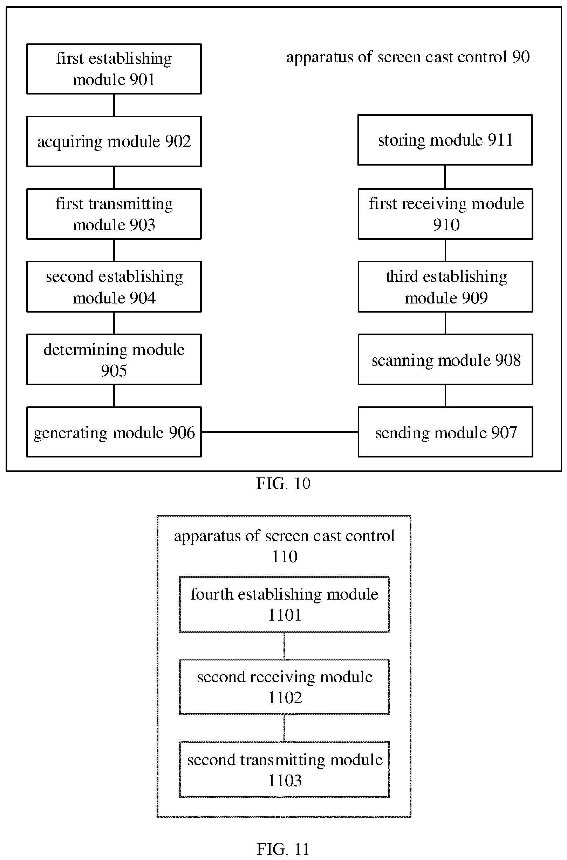

FIG. 10 is a block diagram illustrating an apparatus of screen cast control according to another embodiment of the present invention. The apparatus 90 may include a second establishing module 904.

The second establishing module 904 is configured to establish a first communication link, in which the first communication link is a communication link for transmitting the information to be cast.

The first transmitting module 903 is configured to transmit the information to be cast to the data reception apparatus using the first communication link.

In some embodiment of the present invention, the apparatus 90 may include: a determining module 905, a generating module 906 and a sending module 907.

The determining module 905 is configured to, prior to transmitting the information to be cast to the data reception apparatus, determine whether the data transmission apparatus has first communication information corresponding to the data reception apparatus;

The generating module 906 is configured to, in response to determining that the data transmission apparatus has the first communication information, generate a link establishment request according to the first communication information, in which the first communication information is communication information corresponding to the data reception apparatus;

The sending module 907is configured to send the link establishment request to the data reception apparatus to trigger establishment of the first communication link.

In some embodiment of the present invention, the apparatus 90 may include a scanning module 908 and a third establishing module 909.

The scanning module 908 is configured to, after determining whether the data transmission apparatus has first communication information corresponding to the data reception apparatus, in response to determining that the data transmission apparatus does not have the first communication information, scan an environment for second communication information, in which the second communication information is the communication information corresponding to the data reception apparatus;

The third establishing module 909 is configured to establish a second communication link according to the second communication information, in which the second communication link is a communication link for transmitting the first communication information.

In some embodiment of the present invention, the apparatus 90 may include a first receiving module 910.

The first receiving module 910 is configured to receive the first communication information fed back by the data reception apparatus using the second communication link.

In some embodiment of the present invention, the apparatus 90 may include a storing module 911.

The storing module 911 is configured to, after receiving the first communication information fed back by the data reception apparatus using the second communication link, store the first communication information.

The second establishing module 904 is configured to establish the first communication link according to the stored first communication information.

In some embodiment of the present invention, the acquiring module 902 is configured to send an information acquisition request to the first device in response to a first cast instruction; receive the information to be cast fed back by the first device using the first data link, cast information corresponding to the information acquisition request being as the information to be cast.

In some embodiment of the present invention, the first transmitting module 903 is configured to, in response to a second cast instruction, generate a cast request according to the information to be cast; and transmit the cast request to the data reception apparatus using the first communication link so as to trigger the data reception apparatus to obtain the information to be cast from the cast request and to cast the information to be cast to the second device, in which the first cast instruction and the second cast instruction are the same or different.

Corresponding to the method of screen cast control provided by the embodiments of FIGs. 1 to 8, the present invention also provides the apparatus of screen cast control. Since the apparatus of screen cast control provided by an embodiment of the present invention corresponds to the method of screen cast control provided by the embodiments of FIGs. 1 to 8, embodiments of the method apparatus of screen cast control are also applicable to the apparatus of screen cast control provided by this embodiment of the present invention, which is not described in detail in this embodiment of the present invention.

In this embodiment, the first data link is established with the first device which includes the information to be cast, the information to be cast is acquired from the first device using the first data link, and the information to be cast is transmitted to the data reception apparatus to trigger the data reception apparatus to cast the information to be cast to the second device. Therefore, when the information to be cast in the first device is cast to the second device, the present invention may effectively avoid modification costs of the first device and of the second device, avoid constraints regarding a distance in spatial positions between the first device and the second device, effectively save the cost of the screen cast, effectively improve the convenience of an operation of the screen cast control, and effectively improve an effect of the screen cast control.

FIG. 11 is a block diagram illustrating an apparatus of screen cast control according to an embodiment of the present invention.

As illustrated in FIG. 11, the apparatus 110 of screen cast control is applicable for a data reception and may include:
a fourth establishing module 1101 configured to establish a second data link with a second device;
a second receiving module 1102 configured to receive information to be cast which is transmitted by a data transmission apparatus, in which the information to be cast is acquired by the data transmission apparatus from the first device; and
a second transmitting module 1103 configured to transmit the information to be cast to the second device using the second data link to trigger the second device to display the information to be cast.

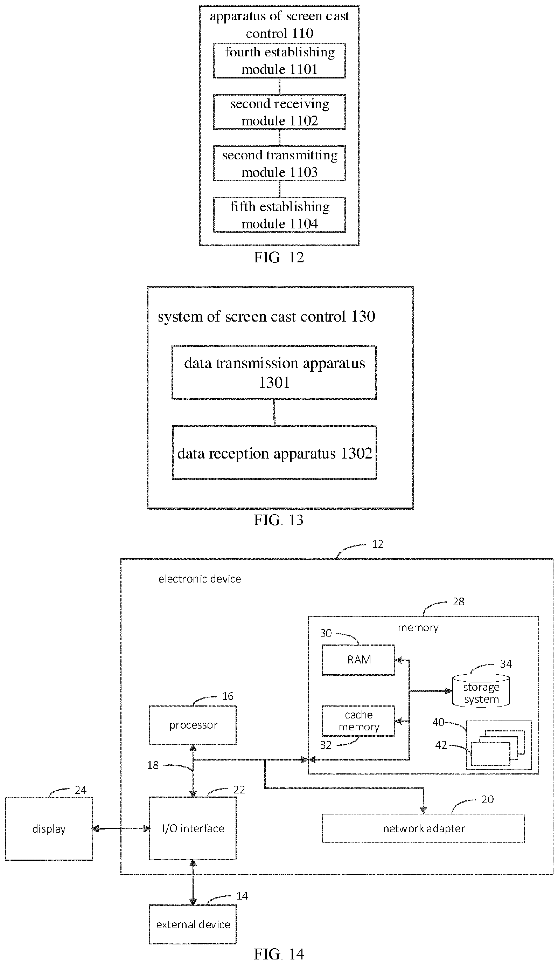

FIG. 12 is a block diagram illustrating an apparatus of screen cast control according to an embodiment of the present invention. The apparatus 110 of screen cast control may include: a fifth establishing module 1104 configured to establish a first communication link, in which the first communication link is a communication link for transmitting the information to be cast. The second receiving module 1102 is configured to receive the information to be cast, which is transmitted by the data transmission apparatus, using the first communication link.

In some embodiments of the present invention, the fifth establishing module 1104 is configured to receive a link establishment request transmitted by data transmission apparatus; obtain first communication information from the link establishment request, in which the first communication information is communication information corresponding to the data reception apparatus; in response to the first communication information being same as the first communication information previously transmitted by the data reception apparatus, establish the first communication link.

In some embodiments of the present invention, the fifth establishing module 1104 is configured to, prior to receiving the link establishment request transmitted by the data transmission apparatus, previously transmit the first communication information to the data transmission apparatus.

In some embodiments of the present invention, the fifth establishing module 1104 is configured to, prior to previously transmitting the first communication information to the data transmission apparatus, broadcast second communication information, in which the second communication information is the communication information corresponding to the data reception apparatus; establish a second communication link according to the second communication information, in which the second communication link is a communication link for transmitting the first communication information.

In some embodiments of the present invention, the fifth establishing module 1104 is configured to previously transmit the first communication information to the data transmission apparatus using the second communication link.

In some embodiments of the present invention, the second receiving module 1102 is configured to receive a cast request transmitted by the data transmission apparatus, in which the cast request is generated according to the information to be cast by the data transmission apparatus; obtain the information to be cast from the cast request.

Corresponding to the method of screen cast control provided by the embodiments of FIGs. 1 to 8, the present invention also provides the apparatus of screen cast control. Since the apparatus of screen cast control provided by an embodiment of the present invention corresponds to the method of screen cast control provided by the embodiments of FIGs. 1 to 8, embodiments of the method apparatus of screen cast control are also applicable to the apparatus of screen cast control provided by this embodiment of the present invention, which is not described in detail in this embodiment of the present invention.

In this embodiment, the second data link with the second device is established, the information to be cast, which is transmitted by the data transmission apparatus, is received, in which the information to be cast is acquired by the data transmission apparatus from the first device, and the information to be cast is transmitted to the second device using the second data link to trigger the second device to display the information to be cast. Therefore, when the second device obtain the information to be cast from the first device, the present invention may effectively avoid modification costs of the first device and of the second device, avoid constraints regarding a distance in spatial positions between the first device and the second device, effectively save the cost of the screen cast, effectively improve the convenience of an operation of the screen cast control, and effectively improve an effect of the screen cast control.

FIG. 13 is a block diagram illustrating a structure of a system of screen cast control according to an embodiment of the present invention.

As illustrated in FIG. 13, the system of screen cast control may include:
a data transmission apparatus 1301 and a data reception apparatus 1302.

It should be noted that the foregoing explanation of the method of screen cast control is also applied to the system 130 of screen cast control in an embodiment, which is not repeated herein.

In an embodiment, the first data link is established with the first device which includes the information to be cast, the information to be cast is acquired from the first device using the first data link, and the information to be cast is transmitted to the data reception apparatus to trigger the data reception apparatus to cast the information to be cast to the second device. Therefore, when the information to be cast in the first device is cast to the second device, the present invention may effectively avoid modification costs of the first device and of the second device, avoid constraints regarding a distance in spatial positions between the first device and the second device, effectively save the cost of the screen cast, effectively improve the convenience of an operation of the screen cast control, and effectively improve an effect of the screen cast control.

In order to realize the above embodiments, a data transmission apparatus is provided in an embodiment of the present invention. The data transmission apparatus includes at least one processor; and a memory communicatively connected to the at least one processor. The memory is stored with instructions executable by the at least one processor, when the instructions are performed by the at least one processor, the at least one processor is caused to perform the method as described in the above embodiments of the invention.

In order to realize the above embodiments, a data reception apparatus is provided in an embodiment of the present invention. The data reception apparatus includes at least one processor; and a memory communicatively connected to the at least one processor. The memory is stored with instructions executable by the at least one processor, when the instructions are performed by the at least one processor, the at least one processor is caused to perform the method as described in the above embodiments of the invention.

In order to realize the above embodiments, a non-transitory computer readable storage medium stored with computer instructions is provided in an embodiment of the present invention. The computer instructions are configured to perform the method as described in the above embodiments of the invention or perform the method as described in the above embodiments of the invention by a computer.

In order to realize the above embodiments, a computer program product is provided in an embodiment of the present invention. Instructions included in the computer program product is configured to perform the method as described in the above embodiments of the invention or perform the method as described in the above embodiments of the invention when performed by a processor.

FIG. 14 is a block diagram illustrating a representative electronic device for implementing embodiments of the present invention. The electronic device 12 illustrated in FIG. 14 is an example and should not limited to the function and scope of embodiments of the present invention.

As illustrated in FIG. 14, the electronic device 12 is represented in a form of a general computing device. Components of the electronic device 12 may include, but are not limited to, one or more processors or processing units 16, a system memory 28, and a bus 18 connecting different system components (including the system memory 28 and the processing unit 16).

The bus 18 represents one or more of several types of bus structures, including a memory bus or memory controller, a peripheral bus, a graphics acceleration port, a processor, or a local bus using any of a variety of bus structures. By way of examples, these architectures include, but are not limited to, Industry Standard Architecture (ISA) bus, Micro Channel Architecture (MAC) bus, Enhanced ISA bus, Video Electronics Standards Association (VESA) local bus, and Peripheral Component Interconnect (PCI) bus.

The electronic device 12 typically includes a variety of electronic computer-readable media. These media can be any available media that can be accessed by the electronic device 12, including volatile and non-volatile media, removable and non-removable media.

The memory 28 may also include a computer system readable medium in a form of volatile memory, such as random access memory (RAM) 30 and/or cache memory 32. The electronic device 12 may further include other removable/non-removable, volatile/non-volatile computer system storage media. For example, the storage system 34 may be used to read and write to non-removable, non-volatile magnetic media (not illustrated in FIG. 14, commonly referred to as a "hard drive").

Although not illustrated in Figure 14, a disk drive may be provided for reading and writing to removable non-volatile magnetic disks (e.g., "floppy disks"), as well as removable non-volatile optical disks (e.g., CD-ROM, DVD-ROM or other optical media) to read and write optical drives. In these cases, each drive may be connected to bus 18 through one or more data media interfaces. The memory 28 may include at least one program product having a set (e.g., at least one) of program modules configured to perform the functions of various embodiments of the invention.

A program/utility 40 having a set (at least one) of program modules 42, which may be stored, for example, in the memory 28, such program modules 42 can include, but are not limited to, an operating system, one or more application programs, other programs modules and program data. Each or some combination of these examples may include an implementation of a network environment. The program modules 42 generally perform the functions and/or methods according to embodiments of the invention.

The electronic device 12 may also communicate with one or more external devices 14 (e.g., keyboard, pointing device, display 24, etc.), one or more devices that enable a user to interact with the electronic device 12, and/or any device (e.g., network card, modem, etc.) that enables the electronic device 12 to communicate with one or more other computing devices. Such communication may occur through an input/output (I/O) interface 22. The electronic device 12 may communicate with one or more networks (e.g., a local area network (LAN), a wide area network (WAN), and/or a public network such as the Internet) through a network adapter 20. As illustrated in FIG. 14, the network adapter 20 communicates with other modules of the electronic device 12 through the bus 18. It should be understood that, although not shown, other hardware and/or software modules may be used in conjunction with electronic device 12, including but not limited to, microcode, device drivers, redundant processing units, external disk drive arrays, RAID systems, tape drives and data backup storage systems.

The processor 16 executes various functional applications and data processing, for example, the method of screen cast control mentioned in the above embodiments, by executing programs stored in the system memory 28.

It should be noted that terms such as "first" and "second" are used herein for purposes of description and are not intended to indicate or imply relative importance or significance or to imply the number of indicated technical features. In the description of the present invention, "a plurality of' means two or more than two, unless specified otherwise.

Reference throughout this specification to "an embodiment," "some embodiments," "one embodiment", "another example," "an example," "a specific example," or "some examples," means that a particular feature, structure, material, or characteristic described in connection with an embodiment or example is included in at least one embodiment or example of the present invention. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present invention. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present invention, and changes, alternatives, and modifications can be made in embodiments without departing from principles and scope of the present invention.

## Claims

1. A method of screen cast control, applicable for a data transmission apparatus, comprising:
establishing (S101, S301) a first data link with a first device, wherein, the first device comprises information to be cast;
acquiring (S102, S302) the information to be cast from the first device using the first data link; and
transmitting (S103, S311) the information to be cast to a data reception apparatus to trigger the data reception apparatus to cast the information to be cast to a second device.

2. The method according to claim 1, further comprising:
establishing a first communication link, wherein the first communication link is a communication link for transmitting the information to be cast;
wherein transmitting the information to be cast to the data reception apparatus comprises:
transmitting the information to be cast to the data reception apparatus using the first communication link.

3. The method according to claim 2, wherein, prior to transmitting (S103, S311) the information to be cast to the data reception apparatus, the method further comprises:
in response to determining that the data transmission apparatus has first communication information corresponding to the data reception apparatus,
generating (S309) a link establishment request according to the first communication information, wherein the first communication information is communication information corresponding to the data reception apparatus; and
sending (S310) the link establishment request to the data reception apparatus to trigger establishment of the first communication link; or
in response to determining that the data transmission apparatus does not have the first communication information corresponding to the data reception apparatus,
scanning (S304) second communication information, wherein the second communication information is the communication information corresponding to the data reception apparatus; and
establishing (S305) a second communication link according to the second communication information, wherein the second communication link is a communication link for transmitting the first communication information.

4. The method according to claim 3, further comprising:
receiving (S306) the first communication information fed back by the data reception apparatus using the second communication link.

5. The method according to claim 4, wherein, after receiving (S306) the first communication information fed back by the data reception apparatus using the second communication link, the method further comprises:
storing (S307) the first communication information;
wherein establishing the first communication link comprises:
establishing (S308) the first communication link according to the stored first communication information.

6. The method according to any one of claims 2 to 5, wherein
acquiring (S102, S302) the information to be cast from the first device using the first data link comprises:
sending an information acquisition request to the first device in response to a first cast instruction; and
receiving the information to be cast fed back by the first device using the first data link, cast information corresponding to the information acquisition request being as the information to be cast; and/or
transmitting (S103, S311) the information to be cast to the data reception apparatus to trigger the data reception apparatus to cast the information to be cast to the second device comprises:
in response to a second cast instruction, generating a cast request according to the information to be cast; and
transmitting the cast request to the data reception apparatus using the first communication link so as to trigger the data reception apparatus to obtain the information to be cast from the cast request and to cast the information to be cast to the second device, wherein the first cast instruction and the second cast instruction are the same or different.

7. A method of screen cast control, applicable for a data reception apparatus, and comprising:
establishing (S401, S601, S701) a second data link with a second device;
receiving (S402, S708) information to be cast which is transmitted by a data transmission apparatus, wherein the information to be cast is acquired by the data transmission apparatus from a first device; and
transmitting (S403, S604, S709) the information to be cast to the second device using the second data link to trigger the second device to display the information to be cast.

8. The method according to claim 7, further comprising:
establishing (S602) a first communication link, wherein the first communication link is a communication link for transmitting the information to be cast;
wherein receiving (S402, S708) the information to be cast which is transmitted by the data transmission apparatus comprises:
receiving (S603) the information to be cast, which is transmitted by the data transmission apparatus, using the first communication link.

9. The method according to claim 8, wherein establishing (S602) the first communication link comprises:
receiving (S705) a link establishment request transmitted by the data transmission apparatus;
obtaining (S706) first communication information from the link establishment request, wherein the first communication information is communication information corresponding to the data reception apparatus; and
in response to the first communication information being the same as the first communication information previously transmitted by the data reception apparatus, establishing (S707) the first communication link.

10. The method according to claim 9, wherein, prior to receiving (S705) the link establishment request transmitted by the data transmission apparatus, the method comprises:
previously (S704) transmitting the first communication information to the data transmission apparatus.

11. The method according to claim 10, wherein
prior to previously (S704) transmitting the first communication information to the data transmission apparatus, the method comprises:
broadcasting (S702) second communication information, wherein the second communication information is the communication information corresponding to the data reception apparatus; and
establishing (S703) a second communication link according to the second communication information, wherein the second communication link is a communication link for transmitting the first communication information; or
previously (S704) transmitting the first communication information to the data transmission apparatus comprises:
previously transmitting the first communication information to the data transmission apparatus using the second communication link.

12. The method according to any one of claims 8 to 11, wherein receiving (S402, S708) the information to be cast, which is transmitted by the data transmission apparatus, using the first communication link comprises:
receiving a cast request transmitted by the data transmission apparatus, wherein the cast request is generated according to the information to be cast by the data transmission apparatus; and
obtaining the information to be cast from the cast request.

13. An apparatus of screen cast control (90), applicable for a data transmission apparatus, and comprising:
a first establishing module (901) configured to establish a first data link with a first device, wherein the first device comprises information to be cast;
an acquiring module (902) configured to acquire the information to be cast from the first device using the first data link; and
a first transmitting module (903) configured to transmit the information to be cast to a data reception apparatus to trigger the data reception apparatus to cast the information to be cast to a second device.

14. An apparatus of screen cast control (110), applicable for a data reception apparatus, and comprising:
a fourth establishing module (1101) configured to establish a second data link with a second device;
a second receiving module (1102) configured to receive information to be cast which is transmitted by a data transmission apparatus, wherein the information to be cast is acquired by the data transmission apparatus from the first device; and
a second transmitting module (1103) configured to transmit the information to be cast to the second device using the second data link to trigger the second device to display the information to be cast.

15. A non-transitory computer readable storage medium stored with computer instructions, wherein, the computer instructions are configured to perform the method according to any one of claims 1 to 6 or any one of claims 7 to 12 by a computer.
